(19) **Europäisches Patentamt**

**European Patent Office**

**Office européen des brevets**

(11) **EP 0 949 205 B1**

(12) **EUROPEAN PATENT SPECIFICATION**

(45) Date of publication and mention
of the grant of the patent:
**04.06.2003 Bulletin 2003/23**

(51) Int Cl.[7]: **C02F 1/46**

(21) Application number: **99104928.9**

(22) Date of filing: **11.03.1999**

(54) **Use of an anode having an electroconductive diamond structure for producing acidic water containing dissolved hydrogen peroxide**

Gebrauch einer Anode mit einer elektrisch leitenden Diamantstruktur zur Herstellung von aufgelöstem Wasserstoffperoxid enthaltendem Säurewasser

Utilisation d'une anode avec une structure en diamant électroconductrice pour la production d'eau acide contenant du peroxyde d'hydrogène dissous

(84) Designated Contracting States:
**DE FR GB**

(30) Priority: **18.03.1998 JP 9077598**

(43) Date of publication of application:
**13.10.1999 Bulletin 1999/41**

(73) Proprietor: **PERMELEC ELECTRODE LTD.**
**Fujisawa-shi, Kanagawa (JP)**

(72) Inventors:
• **Nishiki, Yoshinori**
**Fujisawa-shi, Kanagawa (JP)**
• **Wakita, Shuhei**
**Fujisawa-shi, Kanagawa (JP)**
• **Nakamatsu, Shuji**
**Fujisawa-shi, Kanagawa (JP)**
• **Tanaka, Masashi**
**Ayase-shi, Kanagawa (JP)**
• **Kusoru, Tateo**
**Isehara-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 5 399 247**

• **CHEMICAL ABSTRACTS, vol. 127, no. 26, 29 December 1997 Columbus, Ohio, US; abstract no. 363516, IIDA, MASAMORI ET AL: "Electrodes for electrolytic cells and electrolytic cells using the electrodes" XP002106283 & JP 09 268395 A (PERMELEC ELECTRODE LTD., JAPAN)**

Remarks:
The file contains technical information submitted after the application was filed and not included in this specification

## Description

The present invention relates to the use, in process for producing hydrogen peroxide, of an electrode containing an electrode material having an electroconductive diamond structure. This use can enable the on-site production of hydrogen peroxide, which can be used for semiconductor cleaning, medical uses, food cleaning and processing, and other applications, together with oxygen and ozone using an electrode containing an electrode material having an electroconductive diamond structure.

Hydrogen peroxide is a useful basic chemical indispensable to the food, medicine, pulp, textile and semiconductor industries. Hitherto, hydrogen peroxide has been industrially mass-produced by a continuous synthesis process in which a 2-alkylanthraquinol is caused to autoxidize to obtain the target compound, and the anthraquinol obtained simultaneously therewith is reduced with hydrogen to the original anthraquinone. However, there is a growing desire for an on-site hydrogen peroxide production apparatus. This is because a troublesome operation, e.g., repeated rectification, is necessary for purifying the mass-produced reaction product, and because hydrogen peroxide is an unstable substance incapable of long-term storage. Hence, care should be taken to ensure safety in transportation and to avoid pollution.

For example, in the production of liquid crystals and electronic parts, a cleaning step is indispensable and the cost of the cleaning step is increasing especially with the increasing degree of integration on semiconductor wafers. It has recently been ascertained that the electrolysis of water yields electrolytic ionic waters having respective oxidizing and reducing properties (the former is referred to as an acidic water or anodic water, while the latter is referred to as an alkaline water or cathodic water). It has been reported that these electrolytic ionic waters, when used in place of a reagent such as a high-purity acid, alkali or hydrogen peroxide, have the same cleaning effect as the reagent and are capable of attaining a considerable cost reduction.

On the other hand, hydrogen peroxide is widely used like ozone as a clean oxidizing agent for oxidizing impurity metals. since the ability of hydrogen peroxide to form complexes with metal ions is higher than that of ozone, hydrogen peroxide can be regarded as a superior detergent. It is known that the coexistence of hydrogen peroxide and ozone, each of which generates OH radicals having higher oxidizing ability, facilitates the generation of these OH radicals.

Although use of the electrolytic ionic waters is desirable from the standpoint of cost, it is desirable to produce an electrolytic ionic water which contains at least one of hydrogen peroxide and ozone, preferably both, when an ordinary electrolytic ionic water provides insufficient cleaning ability. Because hydrogen peroxide and ozone have high oxidizing ability and are apt to cause electrode materials and electrolytic-cell elements to gradually dissolve away, it is necessary to employ a noble metal, e.g., platinum or iridium, or an oxide thereof as an electrode material and a valve metal, e.g., titanium, or an alloy thereof as an electrolytic-cell element such as, e.g., a power feeder. These materials not only are very expensive, but also are gradually consumed depending on the current density and operation time and thus unavoidably dissolve in the electrolytic liquid. Also used besides these are carbonaceous materials such as graphite, amorphous carbon materials and silicon carbide. Because these carbonaceous materials dissolve as carbon dioxide in an electrolytic liquid, they do not foul the electrolyte even after the dissolution occurs. However, those carbonaceous materials are consumed in electrolysis at an exceedingly high rate, especially during anodic polarization. Consequently, an electrode having a higher corrosion resistance is desired.

With respect to the production of hydrogen peroxide, methods based on the reduction reaction of oxygen gas have been proposed. U.S.-A-3,592,749 discloses several apparatuses for the electrolytic production of hydrogen peroxide. U.S.-A-4,384,931 discloses a process for producing an alkaline hydrogen peroxide solution with an ion-exchange membrane. Furthermore, U.S.-A-3,969,201 proposes an apparatus for hydrogen peroxide production which contains a carbon cathode having a three-dimensional structure and an ion-exchange membrane. However, in these techniques, the amount of alkali which is inevitably produced simultaneously with hydrogen peroxide generation increases almost in proportion to the amount of hydrogen peroxide that is produced. Consequently, the hydrogen peroxide solution thus obtained has limited use because the alkali concentration is too high relative to the concentration of hydrogen peroxide.

U.S.-A-4,406,758, US-A-4,891,107 and US-A-4,457,953 disclose processes for hydrogen peroxide production in which a porous diaphragm and a hydrophobic carbon cathode are used to obtain an alkaline aqueous hydrogen peroxide solution having a small alkali proportion (a low sodium hydroxide/hydrogen peroxide molar ratio). These processes, however, have drawbacks in that the control of operation conditions is troublesome because the amount of electrolyte solution moving from the anode chamber to the cathode chamber and the rate of movement are difficult to control. Furthermore, these processes are especially troublesome in that hydrogen peroxide does not generate in a constant proportion.

In the *Journal of Electrochemical Society,* Vol. 130, pp. 1117-1119 (1983), a method is proposed for stably obtaining an acidic hydrogen peroxide solution in which a cation- and anion-exchange membrane is used and sulfuric acid is fed to an intermediate chamber. Furthermore, a technique for improving performance by using united membrane electrodes as an anode has been reported in *Denki Kagaku,* Vol.57, p.1073 (1989). However, these techniques are disadvantageous in cost because the electric power consumption rate is too high. In these methods, hydrogen peroxide is efficiently obtained in an atmosphere of aqueous alkali solution. Consequently, these methods each necessitates the use of an alkali as a feed material and hence still present problems concerning transportation and safety as in conventional processes. An on-site electrolytic apparatus employing palladium metal has been proposed in JP-A-7-118002 (the term "JP-A" as used herein means an "unexamined published Japanese patent application") as a technique in which the use of an alkali is not indispensable. However, this technique has problems concerning the cost and stability of the electrode. Although a technique of obtaining hydrogen peroxide by means of anionic polarization with platinum or a lead oxide catalyst is also known, this technique has an exceedingly low electrode efficiency and has no practical value. JP-A-9 268 395 and JP-A-9 279 398 both relate to the production of ozone using an electroconductive diamond structure bearing material as electrode material.

As described above, the prior art electrolytic processes, not to mention the conventionally generally used oxygen reduction process employing anthraquinone and the ammonium sulfate process, are unable to provide hydrogen peroxide at a sufficiently stable and relatively high efficiency, except for electrolytic techniques in which a relatively strong alkaline atmosphere is used.

It is therefore an object of the present invention to provide the use of a specific material in an electrolytic cell for electrolytically producing hydrogen peroxide, which has conventionally been difficult to electrolytically produce in a stable manner, together with ozone and oxygen at a relatively high efficiency. This object has been solved with the claimed subject matter according to claim 1. Preferred embodiments are given in the subclaims.

The present invention may be carried out in an electrolytic cell for hydrogen peroxide production partitioned with at least one ion-exchange membrane into an anode chamber including an anode and a cathode chamber or into an anode chamber including an anode, an intermediate chamber and a cathode chamber. The anode contains an electrode material having an electroconductive diamond structure.

## BRIEF DESCRIPTION OF THE DRAWINGS

Fig. 1 is a diagrammatic vertical sectional view illustrating one embodiment of a two-chamber electrolytic cell.

Fig. 2 is a diagrammatic vertical sectional view illustrating one embodiment of a three-chamber electrolytic cell.

Fig. 3 is a diagrammatic vertical sectional view illustrating another embodiment of the two-chamber electrolytic cell.

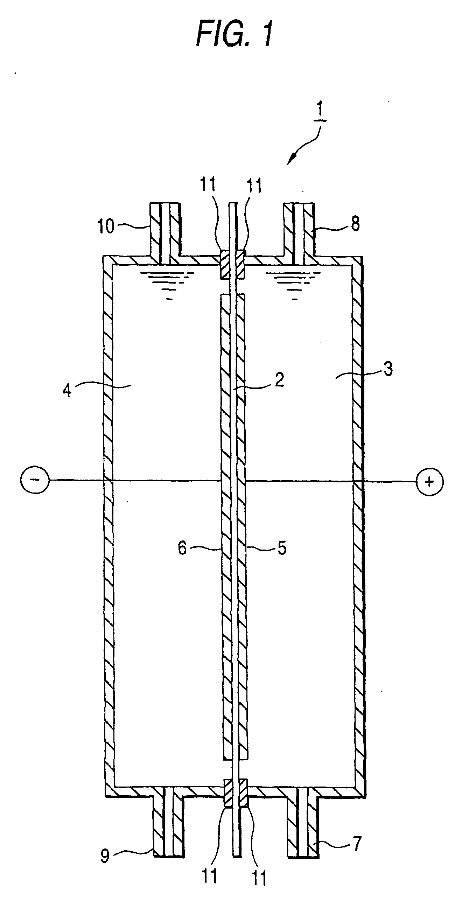

A description of the symbols in Figs. 1 to 3 is given below.

1 ... electrolytic cell, 2 ... ion-exchange membrane, 3 ... anode chamber, 4 ... cathode chamber, 5 ... anode, 6 ... cathode, 21 ... electrolytic cell, 22 ... ion-exchange membrane, 23 ... anode chamber, 24 ... intermediate chamber, 25 ... ion-exchange membrane, 26 ... cathode chamber, 27 ... anode, 28 ... cathode, 41 ... electrolytic cell, 43 ... ion-exchange membrane, 44 ... anode chamber, 45 ... cathode chamber, 46 ... anode, 47 ... cathode.

## DETAILED DESCRIPTION OF THE INVENTION

The present invention is characterized in that an anode wherein an electrode material having an electroconductive diamond structure is deposited on an electrode base to constitute an electrode is used to electrolyze water and thereby produce hydrogen peroxide and other substances. As described above, none of the chemical processes such as the anthraquinone process and the electrolytic processes in which electrode materials such as carbon and platinum are used has been capable of yielding hydrogen peroxide under satisfactory conditions.

The present inventors have investigated various electrode materials and, as a result, have achieved the present invention, in which a substance having an electroconductive diamond structure, e.g., a synthetic diamond, is used as an electrode material for hydrogen peroxide production. It has been found that the use of a substance having an electroconductive diamond structure as an electrode material in water electrolysis produces hydrogen peroxide at a considerably higher current efficiency as compared with conventional processes for electrolytic hydrogen peroxide production, and hence is of practical value. The acidic water produced by the present invention, which contains hydrogen peroxide and ozone, has exceedingly high oxidizing ability and is useful for semiconductor cleaning and medical uses. However, the hydrogen peroxide and the ozone contained in the acidic water need not be used together, but rather may be used after separating these components from one another.

The electrolysis of water with an electrode wherein an electrode material having an electroconductive diamond structure is deposited on an electrode base to constitute an electrode involves the following three anodic reactions.

$$2H_2O \rightarrow O_2 + 4H^+ + 4e^-  \quad (1.23\ V) \quad (1)$$

$$3H_2O \rightarrow O_3 + 6H^+ + 6e^- \qquad (1.51 \text{ V}) \qquad (2)$$

$$2H_2O \rightarrow H_2O_2 + 2H^+ + 2e^- \qquad (1.78 \text{ V}) \qquad (3)$$

Although the oxygen-generating reaction (1) preferentially proceeds from the standpoint of equilibrium, the existence of an activation overvoltage enables ozone and hydrogen peroxide to be produced. It is known that diamond has a higher overvoltage than platinum catalysts and lead oxide catalysts and stably yields ozone. The proportion of the ozone thus produced to the sum of ozone and oxygen that is generated using a diamond electrode is considerably larger than that in electrolysis with a platinum electrode.

With respect to hydrogen peroxide production, which is more useful than ozone production, it has been found that an electrode wherein, as an electrode material a substance having an electroconductive diamond structure is deposited on an electrode base to constitute an electrode can be operated in a sufficiently stable manner and at a sufficiently high current efficiency even when used on an industrial scale.

The proportion of each of the aforementioned three anodic reactions in electrolysis with the electrode as defined above can be controlled by changing electrolytic conditions such as temperature and current density or by bubbling an inert gas such as argon into the electrolyte.

Examples of the electrode material having an electroconductive diamond structure for use in the present invention include a diamond which has been made electroconductive by doping with an impurity, e. g., boron, phosphorus or graphite and a composite of diamond with, e.g., amorphous silicon oxide (DLN, diamond nanocomposite), and further include silicon carbide, titanium carbide, tungsten carbide. The doping with graphite need not be conducted by adding graphite itself. For example, in the case of obtaining diamond by a CVD method, a slight amount of graphite can be incorporated in the resultant diamond, for example, by regulating the amount of hydrogen used as a surrounding gas or by slightly changing the temperature. Besides the substance having an electroconductive diamond structure, a substance such as, e.g., platinum, iridium, tin or lead may be added as an electrode material.

Like conventional electrode materials, the substance having an electroconductive diamond structure is deposited on an electrode base to constitute an electrode. That substance is desirably in the form of fine particles having a particle diameter of from 0.01 to 1 μm. For the purpose of inhibiting an electrolytic liquid from penetrating to the base, the thickness of the deposit is preferably about from 0.1 to 50 μm, more preferably from 1 to 10 μm. In the case where a diamond is used as the electrode material, a powder of natural diamond can be employed. However, because of the extraordinary expense of natural diamond, it is desirable to employ a synthetic diamond obtained by reducing an organic compound.

The synthetic diamond can be synthesized by thermal CVD (chemical vapor deposition) in which an organic compound such as, e.g., methyl alcohol, ethyl alcohol or acetone serving as a carbon source is pyrolyzed in a reducing atmosphere, e.g., hydrogen gas. Although other methods such as, e.g., physical vapor deposition (PVD) and plasma-assisted CVD can be used for the synthesis, it is desirable to use CVD, in which the rate of film formation is exceedingly high. In the CVD, the organic compound is heated generally by contacting a gas of the compound with a heated filament. The temperature of the filament is desirably regulated to from 1,800 to 2,400°C although it varies depending on the capacity of the apparatus, the rate of treatment, etc. In this treatment, the temperature of the base reaches 750 to 950°C. The concentration of the organic compound gas is desirably from 0.1 to 10% by volume based on the hydrogen, and the total gas flow rate and the pressure are desirably regulated to from 10 to 1,000 ml/min and 1 atm, respectively.

Since a synthetic diamond for use as an electrode material is deposited on a base, the synthetic diamond which is being produced by the reduction operation described above is desirably deposited directly on the surface of the electrode base without isolating the same. Although diamond in itself has no electrical conductivity, a diamond having satisfactory electrical conductivity is obtained generally by incorporating an impurity into the organic compound used as a starting material and depositing the impurity on a base together with the organic compound. Usable examples of the impurity include simple substances each consisting of an element having a valence different from that of carbon and compounds of such elements, e.g., powdery boric acid (boron oxide) and diphosphorus pentoxide. Although diborane ($B_2H_6$) and phosphine ($PH_3$) are also usable as the impurity besides those substances, these are highly toxic. It is hence desirable to use powdery boric acid or diphosphorus pentoxide. The content of the impurity is preferably from 1 to 50,000 ppm, more preferably from 100 to 10,000 ppm. The resistivity can be regulated in the range of from 100 to 0.1 Ωcm.

Besides diamonds, silicon carbide or titanium carbide, each having a diamond structure, can be deposited on a base by CVD or PVD in the same manner as for diamonds. However, plasma spraying is desirably used for silicon carbide or titanium carbide, because this technique can deposit electroconductive particles of the carbide and can further elevate the electrical conductivity thereof by exposing the deposited particles to a high temperature. In the case of using plasma spraying, it is necessary to form a thicker deposit than in CVD in order to completely coat the base metal. Although an appropriate range of the deposit thickness in the case of titanium carbide is from 10 to 20 $\mu$m, the titanium carbide deposit may, of course, have a thickness outside that range. Silicon carbide has advantages in that it is inexpensive, has high electrical conductivity, and is effective in electrolysis in halogen-containing baths. The thickness of the silicon carbide deposit is desirably regulated to about from 50 to 200 $\mu$m.

The base may also function as a collector. The base material may comprise titanium, niobium, tantalum, silicon, carbon, nickel tungsten carbide, etc. Such a material is used after having been processed into a gauze, powder sinter, metal fiber sinter, etc. A collector may be disposed separately from the base.

Although the present invention is desirably used for electrolyzing high-purity water to produce a high-purity acidic water or the like, it may be used for electrolyzing water containing a corrosive ingredient to produce hydrogen peroxide. Unlike the electrolysis of pure water, the electrolysis of such an electrolytic liquid containing a corrosive ingredient is accompanied with the dissolution of an electrode material when viewed microscopically, although the rate of dissolution is very low. From the standpoint of stability of the base for use in the electrolysis of a corrosive ingredient, it is desirable to employ niobium or tantalum, both having high corrosion resistance, as the base material.

An electrode material having an electroconductive diamond structure is deposited over the surface of the base either directly or through an interlayer. The base surface is preferably roughened for improving the adhesion of the interlayer or the electrode material having an electroconductive diamond structure to the base and lowering the real current density. For use under high-current-density conditions, the base surface desirably is highly roughened, e.g., with about a #20 alumina grit. For use under corrosive conditions with a relatively low current density, surface roughening is desirably conducted with a fine #60 to #120 alumina sand. Thus, the deposit adhesion is improved.

The electrode thus produced has a high electrode potential and excellent durability. Although this electrode can be used either as an anode or a cathode, it is used as an anode in the present invention to produce an acidic water containing hydrogen peroxide, ozone and oxygen.

This anode is incorporated into an electrolytic cell which has been partitioned with at least one ion-exchange membrane into two chambers including of an anode chamber and a cathode chamber or into three chambers including of an anode chamber, an intermediate chamber and a cathode chamber. The anode is disposed in the anode chamber. Although the ion-exchange membrane may be either a fluororesin membrane or a hydrocarbon resin membrane, the former is preferred from the standpoint of corrosion resistance. The ion-exchange membrane functions not only to prevent the ions produced on the anode and those produced on the cathode from being consumed on the respective counter electrodes, but also to accelerate electrolysis when the electrolytic liquid has a low electrical conductivity.

As an electrolyte for water electrolysis, sulfuric acid, perchloric acid, or the like may be used. However, in view of the labor and time required for separating and purifying the hydrogen peroxide produced in such an electrolyte solution, the optimum method is to use the ion-exchange membrane as an electrolyte and supply high-purity water as a feed material.

The cathode is not particularly limited, and may be either a hydrogen-generating cathode or an oxygen gas cathode. In the case of the latter electrode, hydrogen peroxide can be produced in the cathode chamber by oxygen reduction simultaneously with hydrogen peroxide production in the anode chamber, when carbon or a gold catalyst is used for the gas electrode. In this case, the oxygen feed amount may be from 1.2 to 10 times the theoretical amount.

The material of the electrolytic cell varies depending on the electrolytic liquid used, the gases to be produced, etc. However, it is desirable to use a glass-lined material, carbon, a highly corrosion-resistant material such as titanium, stainless-steel, or a PTFE resin, or the like from the standpoints of durability and stable hydrogen peroxide production.

Where it is desirable to bring an electrode into close contact with the ion-exchange membrane, this may be accomplished by mechanically bonding these to each other beforehand or by applying a pressure thereto during electrolysis. This pressure is preferably from 0.00988 to 2.942 MPa (0.1 to 30 kgf/cm$^2$).

Conditions for the electrolysis vary depending on the electrolytic liquid used, etc. However, the conditions preferably include a temperature of from 5 to 50°C and a current density of from 1 to 50 A/dm$^2$. The current density refers to the ion-exchange membrane surface area.

Examples of the electrolytic cell for hydrogen peroxide production according to the present invention are described below by reference to the accompanying drawings.

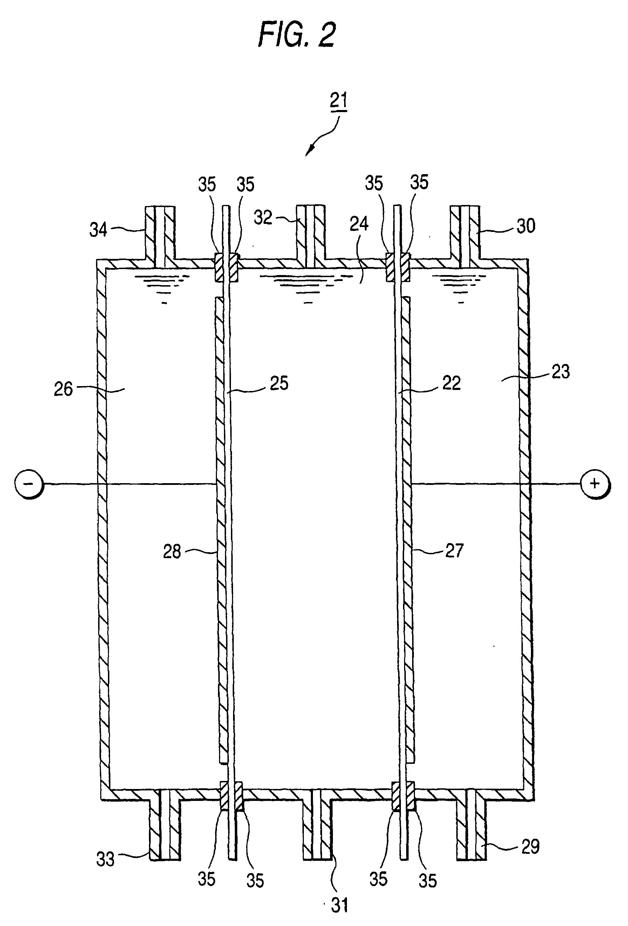

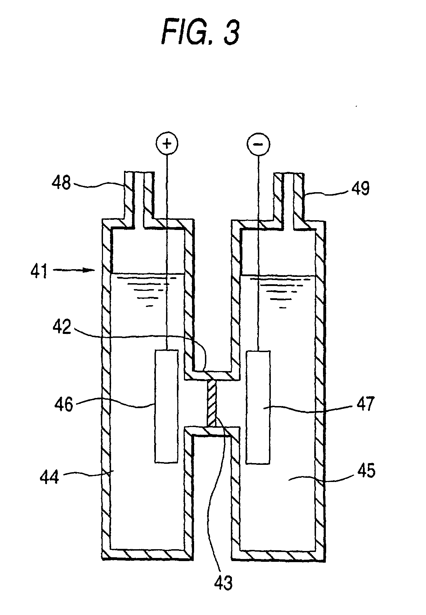

Fig. 1 is a diagrammatic vertical sectional view illustrating one embodiment of the two-chamber electrolytic cell among electrolytic cells for hydrogen peroxide production according to the present invention. Fig. 2 is a diagrammatic vertical sectional view illustrating one embodiment of the three-chamber electrolytic cell among electrolytic cells according to the present invention. Fig. 3 is a diagrammatic vertical sectional view illustrating another embodiment of the two-chamber electrolytic cell.

Fig. 1 shows a two-chamber electrolytic cell 1 which has been partitioned with an ion-exchange membrane 2 into an anode chamber 3 and a cathode chamber 4. The ion-exchange membrane 2 has, on its side facing the anode chamber 3, an anode 5 which includes a base coated with an electrode material having an electroconductive diamond structure and is in intimate contact with the membrane 2. The ion-exchange membrane 2 further has, on its side facing the cathode chamber 4, a porous cathode 6 which includes, for example, a metal mesh and is in intimate contact with the membrane 2.

The anode chamber 3 has a pure-water feed inlet 7 and an acidic-water discharge outlet 8 at the bottom and the top thereof, respectively, while the cathode chamber 4 has a pure-water feed inlet 9 and an alkaline-water discharge outlet 10 at the bottom and the top thereof, respectively. Numeral 11 denotes a packing for filling the space between the ion-exchange membrane 2 and the peripheral parts.

Fig. 2 shows a three-chamber electrolytic cell 21 which has been partitioned with a cation-exchange membrane 22 into an anode chamber 23 and an intermediate chamber 24 and further with another cation-exchange membrane 25 into the intermediate chamber 24 and a cathode chamber 26. The cation-exchange membrane 22 has, on its side facing the anode chamber 23, an anode 27 which includes a base coated with an electrode material having an electroconductive diamond structure and is in intimate contact with the membrane 22. On the other hand, the cation-exchange membrane 25 has, on its side facing the cathode chamber 26, a porous cathode 28 in intimate contact therewith.

The anode chamber 23 has a pure-water feed inlet 29 and an acidic-water discharge outlet 30 at the bottom and the top thereof, respectively, while the intermediate chamber 24 has a salt solution feed inlet 31 and a salt solution discharge outlet 32 at the bottom and the top thereof, respectively. Furthermore, the cathode chamber 26 has a pure-water feed inlet 33 and an alkaline-water discharge outlet 34 at the bottom and the top thereof, respectively. Numeral 35 denotes a packing for filling the space between the ion-exchange membrane 22 or 25 and the peripheral parts.

Fig. 3 shows a two-chamber electrolytic cell 41 which has been partitioned into an anode chamber 44 and a cathode chamber 45 with an ion-exchange membrane 43 disposed in a small-diameter connecting part 42. The anode chamber 44 has an anode 46 which includes a base coated with an electrode material having an electroconductive diamond structure and is suspended therein so as to be apart from the ion-exchange membrane 43. The cathode chamber 45 likewise has a porous cathode 47 which includes, for example, a metal mesh and is suspended therein so as to be apart from the ion-exchange membrane. The anode chamber 44 and the cathode chamber 45 respectively have product gas discharge outlets 48 and 49 at their tops.

In each of the electrolytic cells 1 and 21 respectively shown in Figs. 1 and 2, electric current is caused to flow through the electrodes 5 and 6 or electrodes 27 and 28, while feeding pure water through the pure-water feed inlet 7 or feeding a salt solution, e.g., an aqueous ammonium chloride solution or sulfuric acid solution, through the salt solution feed inlet 31. As a result, an acidic water containing hydrogen peroxide, ozone and oxygen dissolved therein is produced in the anode chamber, while an alkaline water is produced in the cathode chamber. The anodes 5, 27 and 46 employ as an electrode material a diamond, to which electrical conductivity has been imparted generally by adding an impurity such as, e.g., phosphorus or boron. By suitably selecting the kind and amount of this impurity or by selecting electrolysis conditions including temperature and current efficiency, the generation amounts of hydrogen peroxide and ozone can be regulated. Since these anodes are free from dissolution of their electrode material, the acidic water which is being produced is not contaminated.

In the electrolytic cell 41 shown in Fig. 3, the anode chamber 44 and the cathode chamber 45 are filled with an electrolytic liquid (sulfuric acid) and current is caused to flow through the electrodes 46 and 47. As a result, given gases generate (oxygen and ozone at anode, and hydrogen at cathode). In this case also, an acidic water which contains hydrogen peroxide and ozone dissolved therein and contains no impurity is obtained, because the anode has an electrode material having an electroconductive diamond structure and the diamond does not dissolve away.

Examples of the hydrogen peroxide production process according to the present invention are given below.

Reference EXAMPLE 1

A 10 μm-thick diamond layer was deposited by a hot-filament CVD method on a perforated silicon carbide plate having a total electrode area of 10 cm$^2$ and a thickness of 3 mm to produce an anode. A porous nickel plate having a ruthenium oxide catalyst supported thereon was used as a cathode. The anode and the cathode were respectively brought into close contact with both sides of a cation-exchange membrane Nafion 350 (manufactured by E.I. du Pont de Nemours & Co.), and the whole structure was tightened to fabricate an electrolytic cell.

A current of 2 A supplied from a power supply was caused to flow through the cell at 40°C while feeding ultrapure water to the anode chamber of the electrolytic cell at a rate of 10 cc/min and further feeding ultrapure water to the cathode chamber at a rate of 3 cc/min. As a result, the cell voltage was 15.5 V. The water obtained at the anode chamber outlet was subjected to colorimetric analysis with a titanium sulfate reagent after the gaseous ingredients dissolved in the water were removed with argon gas. As a result, the water was found to have a hydrogen peroxide concentration of 8 mg/l and the current efficiency was 0.4%. The anode chamber outlet gas contained ozone in an amount of 20,000 ppm and the current efficiency for ozone generation was 3%.

Reference EXAMPLE 2

Electrolysis was conducted under the same conditions as in Example 1, except that a gas electrode (sheet thickness, 0.2 mm) consisting of graphite particles and polytetrafluoroethylene particles (1:1 by volume) was used as a cathode. Also, oxygen gas and ultrapure water were fed to the cathode chamber at rates of 20 cc/min and 1 cc/min, respectively, and the temperature was regulated to 35°C. As a result, the cell voltage was 12.5 V. The water obtained at the anode chamber outlet was subjected to colorimetric analysis with a titanium sulfate reagent after the gaseous ingredients dissolved in the water were removed with argon gas. As a result, the water was found to have a hydrogen peroxide concentration of 10 mg/l and the current efficiency was 0.5%. The anode chamber outlet gas contained ozone in an amount of 20,000 ppm and the current efficiency for ozone generation was 3%. Furthermore, the water obtained at the cathode chamber outlet had a hydrogen peroxide concentration of 100 mg/l and the current efficiency was 0.5%. Consequently, the current efficiency of the whole electrolytic cell was 1%.

Reference EXAMPLE 3

Electrolysis was conducted under the same conditions as in Example 2, except that a palladium foil (thickness, 0.05 mm) was used as a cathode. Also, oxygen gas and pure water were fed to the cathode chamber at rates of 200 cc/min and 100 cc/min, respectively, and the temperature was regulated to 40°C. As a result, the cell voltage was 16 V. The water obtained at the anode chamber outlet was subjected to colorimetric analysis in the same manner as in Example 2. As a result, the water was found to have a hydrogen peroxide concentration of 10 mg/l and the current efficiency was 0.5%. The anode chamber outlet gas contained ozone in an amount of 20,000 ppm and the current efficiency for ozone generation was 3%. Furthermore, the water obtained at the cathode chamber outlet had a hydrogen peroxide concentration of 1 mg/l and the current efficiency was 2.4%. Consequently, the current efficiency of the whole electrolytic cell was 2.9%.

COMPARATIVE EXAMPLE 1

Electrolysis was conducted under the same conditions as in Example 1, except that a perforated titanium plate (mesh) coated with a 10 μm-thick platinum layer in place of a diamond layer was used as an anode and the temperature was regulated to 35°C. As a result, the cell voltage was 6.5 V. The water obtained at the anode chamber outlet was subjected to colorimetric analysis in the same manner as in Example 1. As a result, the hydrogen peroxide concentration thereof was below the detection limit of 0.1 mg/l and the current efficiency was 0.03% or lower. The anode chamber outlet gas contained ozone in an amount of 75,000 ppm and the current efficiency for ozone generation was 10%.

COMPARATIVE EXAMPLE 2

A 100 μM-thick lead oxide layer was electrodeposited on a porous titanium plate having a total electrode area of 10 cm$^2$ and a thickness of 2.6 mm (bibili fiber sintered product; manufactured by Tokyo Steel Mfg. Co., Ltd.) to produce an anode. The same electrolytic cell as in Example 1 was fabricated, except that this anode was used. A current of 10 A was caused to flow through the cell at 35°C while feeding ultrapure water to the anode chamber at a rate of 10 cc/min and further feeding pure water to the cathode chamber at a rate of 3 cc/min. As a result, the cell voltage was 3.5 V. The water obtained from the anode chamber outlet was subjected to colorimetric analysis in the same manner as in Example 1. As a result, the hydrogen peroxide concentration thereof was 0.3 mg/l and the current efficiency was 0.03% or lower. The anode chamber outlet gas contained ozone in an amount of 75,000 ppm and the current efficiency for ozone generation was 10%.

According to the present invention, by using an electrode containing an electrode material having an electroconductive diamond structure as an anode, it is possible to obtain, in particular, ozone and hydrogen peroxide within the same electrode chamber. Namely, an acidic water containing ozone and hydrogen peroxide dissolved therein can be obtained in a single electrolytic operation.

Conventional electrolytic processes for hydrogen peroxide production have an exceedingly low current efficiency, and none of these has been a practical process for hydrogen peroxide production. In contrast, the use of the present invention, in which an anode containing a substance having an electroconductive diamond structure is used to electrolyze water, attains a far higher current efficiency for hydrogen peroxide generation than the conventional electrolytic processes for hydrogen peroxide production, and can be a practical process for hydrogen peroxide production. This is because the electrode material having an electroconductive diamond structure has a far higher catalytic activity for hydrogen peroxide generation than conventional electrodes. In addition, the use of the present invention is advantageous in that ozone and oxygen are generated simultaneously with hydrogen peroxide. Furthermore, the substance having an electroconductive diamond structure has high durability and is not dissolved in the electrolysis. Therefore, an acidic water having high oxidizing ability and containing almost no dissolved impurities is produced in the anode chamber. This acidic water is useful for cleaning electronic apparatuses and electronic devices for which a high purity and high cleaning ability are especially required.

In the electrolytic production of hydrogen peroxide using the present invention, the electrolytic liquid is almost neutral and there is no need to add an alkali as in conventional processes. Consequently, the electrolyzed water thus produced has a wider range of applications, and the process has improved profitability and operating efficiency.

The electrolytic cell for hydrogen peroxide employing the present invention, which has been partitioned with at least one ion-exchange membrane into an anode chamber and a cathode chamber or into an anode chamber, an intermediate chamber and a cathode chamber, is characterized in that water is electrolyzed with an anode wherein as an electrode material a substance having an electroconductive diamond structure is deposited on an electrode base, to thereby yield oxygen, ozone and hydrogen peroxide in the anode chamber. Also with this electrolytic cell, hydrogen peroxide can likewise be produced together with oxygen and ozone at a far higher current efficiency than in conventional electrolytic cells.

**Claims**

1. Use of an anode wherein an electrode material having an electroconductive diamond structure is deposited on an electrode base to constitute an electrode in an electrolytic cell for hydrogen peroxide production partitioned with at least one ion-exchange membrane into an anode chamber including said anode and a cathode chamber.

2. Use as claimed in claim 1, wherein the cell is partitioned with two ion-exchange membranes into anode chamber including an anode-containing an electrode material having an electroconductive diamond structure, an intermediate chamber and a cathode chamber.

3. Use as claimed in claim 1, wherein the cell further comprises means for supplying pure water to said anode and cathode chambers.

4. Use as claimed in claim 2, wherein the cell further comprises means for supplying pure water to said anode and cathode chambers and means for supplying an aqueous salt solution to said intermediate chamber.

5. Use as claimed in claim 1, wherein the cell comprises means for passing current through said electrolytic cell.

6. Use as claimed in claim 2, wherein the cell comprises means for passing current through said electrolytic cell.

7. Use as claimed in claim 1, wherein the cell comprises means for electrolyzing water at a temperature of from 5 to 50°C and a current density of from 1 to 50 A/dm$^2$.

8. Use as claimed in claim 2, wherein the cell comprises means for electrolyzing water at a temperature of from 5 to 50° C and a current density of from 1 to 50 A/dm$^2$.

9. Use as claimed in claim 1, wherein said electrode material having an electroconductive diamond structure is selected from the group consisting of diamond which has been made electroconductive by doping with an impurity, a composite of diamond with amorphous silicon oxide, silicon carbide, titanium carbide and tungsten carbide.

10. Use as claimed in claim 1, wherein said electrode material having an electroconductive diamond structure comprises diamond which has been made electroconductive by doping with an impurity.

11. Use as claimed in claim 10, wherein said impurity is selected from the group consisting of boron oxide and diphosphorus pentoxide.

12. Use as claimed in claim 1, wherein the electrode material deposited on said base comprises diamond which has been made electroconductive by doping with an impurity and said electrode material has a thickness of from 0.1 to 50 µm.

13. Use as claimed in claim 1, wherein the electrode material deposited on said base comprises diamond in the form of fine particles having a particle diameter of from 0.01 to 1 µm which has been made electroconductive by doping with an impurity.

14. Use as claimed in claim 1, wherein the electrode material deposited on said base comprises diamond having a resistivity in the range of from 100 to 0.1 Ωcm which has been made electroconductive by doping with an impurity.

15. Use as claimed in claim 1, wherein the electrode material deposited on said base comprises titanium carbide having a thickness of from 10 to 20 µm.

16. Use as claimed in claim 1, wherein the electrode material deposited on said base comprises silicon carbide having a thickness of from 50 to 200 µm.

**Patentansprüche**

1. Verwendung einer Anode, hergestellt durch Beschichten eines Elektrodensubstrats mit einem Elektrodenmaterial mit einer elektrisch leitfähigen Diamantstruktur, um eine Elektrode herzustellen, in einer Elektrolysezelle für die Herstellung von Wasserstoffperoxid, wobei die Elektrolysezelle durch mindestens eine Ionenaustauschmembran in eine Anodenkammer, umfassend die Anode, und eine Kathodenkammer unterteilt ist.

2. Verwendung nach Anspruch 1, wobei die Zelle durch zwei Ionenaustauschmembranen in eine Anodenkammer, umfassend die Anode mit einem Elektrodenmaterial mit einer elektrisch leitfähigen Diamantstruktur, eine Zwischenkammer und eine Kathodenkammer unterteilt ist.

3. Verwendung nach Anspruch 1, wobei die Zelle weiterhin Vorrichtungen, mit denen reines Wasser in die Anodenkammer und in die Kathodenkammer eingebracht werden kann, umfasst.

4. Verwendung nach Anspruch 2, wobei die Zelle weiterhin Vorrichtungen, mit denen reines Wasser in die Anodenkammer und in die Kathodenkammer eingebracht werden kann, sowie Vorrichtungen, mit denen eine wässrige Lösung eines Salzes in die Zwischenkammer eingebracht werden kann, umfasst.

5. Verwendung nach Anspruch 1, wobei die Zelle Vorrichtungen umfasst, über die ein Strom durch die Elektrolysezelle geleitet werden kann.

6. Verwendung nach Anspruch 2, wobei die Zelle Vorrichtungen umfasst, über die ein Strom durch die Elektrolysezelle geleitet werden kann.

7. Verwendung nach Anspruch 1, wobei die Zelle Vorrichtungen umfasst, unter Verwendung derer Wasser bei einer Temperatur im Bereich von 5 bis 50°C und bei einer Stromdichte im Bereich von 1 bis 50 A/dm$^2$ elektrolysiert werden kann.

8. Verwendung nach Anspruch 2, wobei die Zelle Vorrichtungen umfasst, unter Verwendung derer Wasser bei einer Temperatur im Bereich von 5 bis 50°C und bei einer Stromdichte im Bereich von 1 bis 50 A/dm$^2$ elektrolysiert werden kann.

9. Verwendung nach Anspruch 1, wobei das Elektrodenmaterial mit einer elektrisch leitfähigen Diamantstruktur ausgewählt ist aus der Gruppe, bestehend aus Diamant, der durch Dotieren mit einer Verunreinigung elektrisch leitfähig gemacht wurde, einer Zusammensetzung aus Diamant und amorphem Siliciumoxid, Siliciumcarbid, Titancarbid und Wolframcarbid.

10. Verwendung nach Anspruch 1, wobei das Elektrodenmaterial mit einer elektrisch leitfähigen Diamantstruktur Diamant, der durch Dotieren mit einer Verunreinigung elektrisch leitfähig gemacht wurde, umfasst.

11. Verwendung nach Anspruch 10, wobei die Verunreinigung ausgewählt ist aus der Gruppe, bestehend aus Boroxid und Diphosphorpentoxid.

12. Verwendung nach Anspruch 1, wobei das Elektrodenmaterial, das auf dem Elektrodensubstrat aufgebracht wurde, Diamant, der durch Dotieren mit einer Verunreinigung elektrisch leitfähig gemacht wurde, umfasst und wobei das Elektrodenmaterial eine Dicke im Bereich von 0,1 bis 50 μm hat.

13. Verwendung nach Anspruch 1, wobei das Elektrodenmaterial, das auf dem Elektrodensubstrat aufgebracht wurde, Diamant in Form von feinen Teilchen mit einem Teilchendurchmesser im Bereich von 0,01 bis 1 μm umfasst, wobei der Diamant durch Dotieren mit einer Verunreinigung elektrisch leitfähig gemacht wurde.

14. Verwendung nach Anspruch 1, wobei das Elektrodenmaterial, das auf dem Elektrodensubstrat aufgebracht wurde, Diamant mit einem spezifischen Widerstand im Bereich von 100 bis 0,1 Ωcm umfasst, wobei der Diamant durch Dotieren mit einer Verunreinigung elektrisch leitfähig gemacht wurde.

15. Verwendung nach Anspruch 1, wobei das Elektrodenmaterial, das auf dem Elektrodensubstrat aufgebracht wurde, Titancarbid umfasst und eine Dicke im Bereich von 10 bis 20 μm hat.

16. Verwendung nach Anspruch 1, wobei das Elektrodenmaterial, das auf dem Elektrodensubstrat aufgebracht wurde, Siliciumcarbid umfasst und eine Dicke im Bereich von 50 bis 200 μm hat.

## Revendications

1. Utilisation d'une anode où une matière d'électrode ayant une structure de diamant électroconductrice est déposée sur une base d'électrode pour constituer une électrode dans une cellule électrolytique pour la production du peroxyde d'hydrogène divisée avec au moins une membrane échangeuse d'ions en une chambre anodique incluant ladite anode et une chambre cathodique.

2. Utilisation selon la revendication 1, où la cellule est divisée avec deux membranes échangeuses d'ions en une chambre anodique incluant une anode contenant une matière d'électrode ayant une structure de diamant électroconductrice, une chambre intermédiaire et une chambre cathodique.

3. Utilisation selon la revendication 1, où la cellule comprend en outre des moyens pour fournir de l'eau pure auxdites chambres anodique et cathodique.

4. Utilisation selon la revendication 2, où la cellule comprend en outre des moyens pour fournir de l'eau pure auxdites chambres anodique et cathodique et des moyens pour fournir une solution salée aqueuse à ladite chambre intermédiaire.

5. Utilisation selon la revendication 1, où la cellule comprend des moyens pour faire passer un courant dans ladite cellule électrolytique.

6. Utilisation selon la revendication 2, où la cellule comprend des moyens pour faire passer un courant dans ladite cellule électrolytique.

7. Utilisation selon la revendication 1, où la cellule comprend des moyens pour électrolyser l'eau à une température de 5 à 50°C et à une densité de courant de 1 à 50 A/dm$^2$.

8. Utilisation selon la revendication 2, où la cellule comprend des moyens pour électrolyser l'eau à une température de 5 à 50°C et à une densité de courant de 1 à 50 A/dm$^2$.

9. Utilisation selon la revendication 1, où ladite matière d'électrode ayant une structure de diamant électroconductrice est choisie dans le groupe consistant en du diamant qui a été rendu électroconducteur par dopage avec une impureté, un composite de diamant avec de l'oxyde de silicium amorphe, du carbure de silicium, du carbure de titane et du carbure de tungstène.

10. Utilisation selon la revendication 1, où ladite matière d'électrode ayant une structure de diamant électroconductrice comprend du diamant qui a été rendu électroconducteur par dopage avec une impureté.

11. Utilisation selon la revendication 10, où ladite impureté est choisie dans le groupe consistant en l'oxyde de bore et le pentoxyde de diphosphore.

12. Utilisation selon la revendication 1, où la matière d'électrode déposée sur ladite base comprend du diamant qui a été rendu électroconducteur par dopage avec une impureté et ladite matière d'électrode a une épaisseur de 0,1 à 50 µm.

13. Utilisation selon la revendication 1, où la matière d'électrode déposée sur ladite base comprend du diamant sous forme de fines particules ayant un diamètre de particules de 0,01 à 1 µm qui a été rendu électroconducteur par dopage avec une impureté.

14. Utilisation selon la revendication 1, où la matière d'électrode déposée sur ladite base comprend du diamant ayant une résistivité dans le domaine de 100 à 0,1 Ωcm qui a été rendu électroconducteur par dopage avec une impureté.

15. Utilisation selon la revendication 1, où la matière d'électrode déposée sur ladite base comprend du carbure de titane ayant une épaisseur de 10 à 20 µm.

16. Utilisation selon la revendication 1, où la matière d'électrode déposée sur ladite base comprend du carbure de silicium ayant une épaisseur de 50 à 200 µm.

# FIG. 1

# FIG. 2

# FIG. 3